(19) Europäisches Patentamt

European Patent Office

Office européen des brevets

(11) **EP 1 413 595 B1**

(12) **FASCICULE DE BREVET EUROPEEN**

(45) Date de publication et mention
de la délivrance du brevet:
**18.01.2006 Bulletin 2006/03**

(51) Int Cl.:
*C08G 69/46* *(2006.01)*      *C08J 3/12* *(2006.01)*
*C08J 3/28* *(2006.01)*      *B29C 67/00* *(2006.01)*
*C08G 69/04* *(2006.01)*      *C08G 69/28* *(2006.01)*

(21) Numéro de dépôt: **03292590.1**

(22) Date de dépôt: **17.10.2003**

(54) **Augmentation du point de fusion et de l'enthalpie de fusion des polyamides par un traitement à l'eau**

Verfahren zur Erhöhung des Schmelzpunktes und der Schmelzenthalpie von Polyamiden durch Behandlung mit Wasser

Process for increasing the melting point and the melting enthalpy of polyamides by water treatment

(84) Etats contractants désignés:
**AT BE BG CH CY CZ DE DK EE ES FI FR GB GR
HU IE IT LI LU MC NL PT RO SE SI SK TR**

(30) Priorité: **23.10.2002 FR 0213219**

(43) Date de publication de la demande:
**28.04.2004 Bulletin 2004/18**

(73) Titulaire: **Arkema**
**92800 Puteaux (FR)**

(72) Inventeurs:
  • **Allen, Jean-Philippe**
    **69540 Irigny (FR)**
  • **Blondel, Philippe**
    **27300 Bernay (FR)**
  • **Douais, Patrick**
    **27410 Le Noyer en Ouche (FR)**

(74) Mandataire: **Neel, Henry et al**
**ARKEMA**
**Département Propriété Industrielle**
**4-8, cours Michelet,**
**La Défense 10**
**92091 Paris La Défense Cedex (FR)**

(56) Documents cités:
**EP-A- 0 911 142**      **FR-A- 1 518 775**
**FR-A- 2 197 922**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

*[Domaine de l'invention]*

La présente invention concerne l'augmentation du point de fusion et de l'enthalpie de fusion des polyamides par un traitement à l'eau. Ce procédé permet d'augmenter la température de fusion Tf ainsi que l'enthalpie de fusion des polyamides sans modification notable de la température de cristallisation Tc (appelée aussi température de solidification). Ces propriétés des polyamides sont utiles dans de nombreux usages et en particulier dans la technologie d'agglomération de poudres de polyamide par fusion utilisant un rayonnement tel que par exemple un faisceau laser (laser sintering).

*[L'art antérieur et le problème technique]*

La technologie d'agglomération de poudres de polyamide sous faisceau laser sert à fabriquer des objets en trois dimensions tels que des prototypes et des modèles. On dépose une fine couche de poudre de polyamide sur une plaque horizontale maintenue dans une enceinte chauffée à une température située entre la température de cristallisation Tc et la température de fusion Tf de la poudre de polyamide. Le laser agglomère des particules de poudre en différents points de la couche de poudre selon une géométrie correspondant à l'objet, par exemple à l'aide d'un ordinateur ayant la forme de l'objet en mémoire et le restituant sous forme de tranches. Ensuite on abaisse la plaque horizontale d'une valeur correspondant à l'épaisseur d'une couche de poudre (par exemple entre 0,05 et 2mm et généralement de l'ordre de 0,1mm) puis on dépose une nouvelle couche de poudre et le laser agglomère des particules de poudre selon une géométrie correspondant à cette nouvelle tranche de l'objet. La procédure est répétée jusqu'à ce qu'on ait fabriqué tout l'objet. On obtient un bloc de poudre contenant à l'intérieur l'objet. Les parties qui n'ont pas été agglomèrées sont donc restées à l'état de poudre. Ensuite on refroidit doucement l'ensemble et l'objet se solidifie dès que sa température descend en dessous de la température de cristallisation Tc. Après complet refroidissement on sépare l'objet de la poudre qui peut être réutilisée pour une autre opération.

Il est recommandé que la poudre ait un écart Tf - Tc le plus grand possible afin d'éviter les phénomènes de déformation (ou "curling") lors de la fabrication. En effet au temps $t_0$, immédiatement après l'action du faisceau laser, la température de l'échantillon est supérieure à la température de cristallisation (Tc) de la poudre mais l'apport d'une nouvelle couche de poudre plus froide fait chuter rapidement la température de la pièce en dessous de Tc et entraîne des déformations.

Par ailleurs une enthalpie de fusion ($\triangle$Hf) la plus élevée possible est requise afin d'obtenir une bonne définition géométrique des pièces fabriquées. En effet si cette dernière est trop faible, l'énergie amenée par le laser est suffisante pour fritter par conduction thermique les particules de poudre proches des parois en construction et ainsi la précision géométrique de la pièce n'est plus satisfaisante.

Il est clair que tout ce qui vient d'être expliqué pour l'agglomération de poudres de polyamide sous faisceau laser est valable quelque soit le rayonnement qui provoque la fusion.

Le brevet **US 6245281** décrit l'utilisation de poudres de polyamide 12 (PA 12) dans la technologie d'agglomération de poudres sous faisceau laser. Ces poudres sont telles que leur Tf est comprise entre 185 et 189°C, leur Tc est comprise entre 138 et 143°C et leur $\triangle$Hf vaut $112 \pm 17$ J/g. Ces poudres sont fabriquées selon le procédé décrit dans le brevet **DE 2906647** (= **US 4334056**). Dans ce dernier on fabrique d'abord du PA 12, on le dissout dans l'éthanol entre 130 et 150°C puis on refroidit doucement en dessous de 125°C sous agitation. Le PA 12 précipite sous forme de poudre.

On a maintenant trouvé un moyen beaucoup plus simple pour augmenter l'écart entre Tf et Tc ainsi que l'enthalpie de fusion ΔHf d'un polyamide, il suffit de mettre ce polyamide à l'état solide en contact avec de l'eau ou de la vapeur d'eau à une température proche de sa température de cristallisation Tc pendant une durée suffisante qui est en général comprise entre quelques heures et 100 heures. A l'issue de ce traitement la température de cristallisation n'est pas (ou peu) modifiée. On peut effectuer ce traitement sur des granulés ou de la poudre de polyamide. On peut ensuite broyer les granulés pour faire de la poudre. L'avantage de faire ce traitement sur des poudres est qu'on fabrique la poudre selon une granulométrie ou une répartition granulométrique qu'on choisit puis on effectue le traitement à l'eau pour obtenir les caractéristiques voulues d'écart entre Tf et Tc ainsi qu'une valeur suffisamment élevée de $\triangle$Hf. Dans le procédé de l'art antérieur il est difficile d'ajuster simultanément l'agitation et le refroidissement. De plus l'utilisation d'éthanol chaud présente un risque d'inflammation.

*[Brève description de l'invention]*

La présente invention concerne un procédé pour augmenter au moins l'un des deux paramètres suivants d'un polyamide : (i) sa température de fusion et (ii) son enthalpie de fusion $\triangle$Hf dans lequel :

- on met en contact ce polyamide à l'état solide avec de l'eau ou de la vapeur d'eau à une température proche de sa température de cristallisation Tc pendant une durée suffisante pour effectuer cette augmentation,
- puis on sépare l'eau (ou la vapeur d'eau) du polyamide et on sèche le polyamide.

Le polyamide peut être un homopolyamide ou un copolyamide. Il peut être un mélange de polyamide et d'au moins un autre polymère, le polyamide formant la matrice et le ou les autres polymères formant la phase dispersée.

Avantageusement le polyamide est sous forme divisée telle que de la poudre ou des granulés. Les granulés ainsi traités peuvent être ensuite broyés pour faire des poudres.

Le traitement à l'eau ou à la vapeur d'eau de l'invention peut aussi être précédé d'un traitement conventionnel au méthanol pour extraire les oligomères éventuels contenus dans le polyamide.

Selon une autre forme de l'invention l'eau ou la vapeur d'eau peut contenir du méthanol, on peut ainsi simultanément extraire des oligomères ou des impuretés contenues dans le polyamide à traiter. Il est recommandé dans cette forme de l'invention de rincer le polyamide avant de le sécher pour bien enlever toute trace de méthanol.

La présente invention concerne aussi un procédé de fabrication d'objets en polyamide par agglomération de poudres de polyamide par fusion utilisant un rayonnement, les poudres ayant été traitées selon le procédé cité plus haut ou résultant d'un broyage de granulés traités selon le procédé cité plus haut. A titre d'exemple de rayonnement on peut citer celui fourni par un faisceau laser (le procédé s'appelle alors "laser sintering"). On peut encore citer le procédé dans lequel un masque est disposé entre la couche de poudre et la source du rayonnement, les particules de poudre protégées du rayonnement par le masque ne sont pas agglomérées.

*[Description détaillée de l'invention]*

**S'agissant du polyamide on entend par polyamide** les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediarnine, la métaxylyènediamine, le bis-p aminocyclohexylméthane et la trimethylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6, le PA 6-6, le PA 11 et le PA 12.

On peut aussi utiliser des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et au moins un autre monomère choisi parmi les diamines aliphatiques différentes de la précédente et les diacides aliphatiques différents du précédent.

A titre d'exemple de lactames on peut citer ceux ayant de 3 à 12 atomes de carbone sur le cycle principal et pouvant être substitués. On peut citer par exemple le $\beta,\beta$-diméthylpropriotactame, le $\alpha,\alpha$-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-$(CH_2)_{10}$-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-trimethyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azéiaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

**On peut utiliser des mélanges de polyamide.** Ce sont par exemple des mélanges de polyamides aliphatiques et de polyamides semi-aromatiques et des mélanges de polyamides aliphatiques et de polyamides cycloaliphatiques.

On peut citer par exemple les compositions transparentes décrites dans la demande de brevet EP 1227131 comprenant en poids, le total étant 100%:

- 5 à 40% d'un polyamide amorphe (B) qui résulte essentiellement de la condensation:

  ➢ soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
  ➢ soit d'un acide alpha oméga amino carboxylique cycloaliphatique,
  ➢ soit d'une combinaison de ces deux possibilités,
  ➢ et éventuellement d'au moins un monomère choisi parmi les acides alpha oméga amino carboxyliques ou les éventuels lactames correspondants, les diacides aliphatiques et les diamines aliphatiques,

- 0 à 40% d'un polyamide souple (C) choisi parmi les copolymères à blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50%,
- le complément à 100% d'un polyamide (A) semi cristallin.

On peut encore citer les compositions transparentes décrites dans la demande de brevet EP 1227132 comprenant en poids, le total étant 100%:

- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi :

  les acides alpha omega amino carboxyliques,
  les diacides aliphatiques,
  les diamines aliphatiques,

- 0 à 40% d'un polyamide souple (C) choisi parmi les copolymères à blocs polyamides et blocs polyether et les copolyamides,
- 0 à 20% d'un compatibilisant (D) de (A) et (B),
- (C)+(D) est compris entre 2 et 50%
- avec la condition que (B)+(C)+(D) n'est pas inférieur à 30%,
- le complément à 100% d'un polyamide (A) semi cristallin.

**On ne sortirait pas du cadre de l'invention** en remplaçant une partie du polyamide par un copolymère à blocs polyamide et blocs polyether, c'est à dire en utilisant un mélange comprenant au moins un des polyamides précédents et au moins un copolymère à blocs polyamide et blocs polyether.

Les copolymères à blocs polyamides et blocs polyéthers résultent de la copolycondensation de séquences polyamides à extrémités réactives avec des séquences polyéthers à extrémités réactives, telles que, entre autres :

  1) Séquences polyamides à bouts de chaîne diamines avec des séquences polyoxyalkylènes à bouts de chaînes dicarboxyliques.
  2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
  3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polytétra méthylène glycol (PTMG). Ce dernier est aussi appelé polytétrahydrofurane (PTHF).

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inhérente entre 0,8 et 2,5 mesurée dans le métacrésol à 25°C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide peut être, en poids, compris entre 1/99 et 15 / 85.

**S'agissant du mélange de polyamide et d'au moins un autre polymère** il se présente sous forme d'un mélange à matrice polyamide et le ou les autres polymères forment la phase dispersée. A titre d'exemple de cet autre polymère on peut citer les polycléfines, les polyesters, le polycarbonate, le PPO (abréviation de polyphenylene oxide), le PPS (abréviation de polyphenylene sulfide), les élastomères.

Le polyamide, qu'il soit ou non en mélange avec au moins un autre polymère peut contenir des charges, des pigments, des antioxydants et des anti UV pourvu qu'au cours du traitement à l'eau ou à la vapeur il ne soit pas altéré.

**Le procédé de l'invention est particulièrement utile pour les polyamides** choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :

> le PA 6-12 résultant de la condensation de l'hexaméthylène diamine et de l'acide 1,12-dodecanedioïque,
> le PA 9-12 résultant de la condensation de la diamine en C9 et de l'acide 1,12-dodecanedioïque,
> le PA 10-10 résultant de la condensation de la diamine en C10 et de l'acide 1,10-decanedioïque,
> le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

Avantageusement le polyamide contient un catalyseur organique ou minéral qu'on a ajouté au cours de la polycondensation. De préférence c'est de l'acide phosphorique ou hypophosphorique. La quantité de catalyseur peut être jusqu'à 3000 ppm par rapport à la quantité de polyamide et avantageusement entre 50 et 1000 ppm.

On ne sortirait pas du cadre de l'invention en utilisant un mélange de polyamides.

**S'agissant des granulés et des poudres**, les granulés peuvent être des particules de quelques mm à 1 cm. Ce sont par exemple ceux qu'on obtient en sortie d'une extrudeuse. Quant aux poudres elles peuvent être de différentes taille. Par exemple les poudres utiles dans le procédé de laser sintering peuvent avoir une taille jusqu'à 350pm et sont avantageusement de taille comprise entre 10 et 100$\mu$m. De préférence le D50 est de 60$\mu$m (c'est à dire que 50% des particules ont une taille inférieure à 60$\mu$m).

**S'agissant du traitement avec de l'eau ou de la vapeur d'eau**, la Tf et le $\Delta$Hf sont le plus souvent simultanément augmentés. On a noté aussi que la Tc n'est pas (ou peu) modifiée, cette modification eventuelle est au plus de quelques °C (par exemple 1 à 3°C).

A propos de la température l'expression "proche de la Tc du polyamide" signifie une température dans une plage entre 10°C en dessous de Tc et 10°C au dessus de Tc. De préférence la température est dans une plage entre 5°C en dessous de Tc et 5°C au dessus de Tc. Par exemple pour le PA 11 elle est entre 150 et 160°C.

La durée de traitement est variable selon la nature des PA, leur état physique (poudre, granulés, ou pièces plus grosses) cependant on a noté qu'il y avait déjà une augmentation sensible de Tf et/ou $\Delta$Hf au bout de quelques heures. Pour obtenir le plein effet du traitement on a noté que la durée était comprise entre 5 et 100 heures. Ce traitement permet d'augmenter le point de fusion des PA de 10 à 15°C et d'obtenir des enthalpies de fusion par exemple de l'ordre de 100 à 110 J/g. Un tel traitement thermique des poudres polyamides dans l'eau ou dans la vapeur d'eau permet un réarrangement des chaînes moléculaires augmentant le point de fusion et l'enthalpie associée. Ces valeurs sont obtenues par les méthodes habituelles telles que DSC (abréviation de differential scanning calorimetry). Ainsi une poudre de PA 11 de caractéristiques suivantes avant traitement :

> Tf comprise entre 185 et 190°C,
> Tc comprise entre 150 et 160°C,
> $\Delta$Hf égale à 80$\pm$5 J/g,

devient de caractéristiques suivantes après traitement :

> Tf comprise entre 195 et 205°C,
> Tc comprise entre 150 et 160°C,

ΔHf égale à 100±5 J/g.

Le traitement peut s'effectuer dans tout dispositif de mise en contact. Par exemple on introduit le polyamide dans un récipient résistant à la pression puis on introduit de l'eau ou de la vapeur ou de l'eau puis de la vapeur ou seulement de l'eau puis on chauffe à l'aide d'une résistance électrique ou d'une double enveloppe contenant un fluide de chauffage ou tout dispositif équivalent. Ces techniques sont connues en elles mêmes. L'homme de métier détermine facilement la pression en fonction de la température de l'eau ou de la vapeur.

On peut aussi effectuer ce traitement à une pression supérieure à la pression correspondant à la température de l'eau par exemple en introduisant de l'azote dans le dispositif de mise en contact. En effet la pression peut avoir un effet sur l'augmentation du point de fusion. Après le traitement il suffit de séparer le polyamide de l'eau ou de la vapeur par tout moyen puis de le sécher. Ces techniques sont connues en elles mêmes.

**Revendications**

1. Procédé pour augmenter au moins l'un des deux paramètres suivants d'un polyamide : (i) sa température de fusion et (ii) son enthalpie de fusion △Hf dans lequel :

   • on met en contact ce polyamide à l'état solide avec de l'eau ou de la vapeur d'eau à une température proche de sa température de cristallisation Tc pendant une durée suffisante pour effectuer cette augmentation,
   • puis on sépare l'eau (ou la vapeur d'eau) du polyamide et on sèche le polyamide.

2. Procédé selon la revendication 1 dans lequel la température est comprise dans une plage entre 10°C en dessous de Tc et 10°C au dessus de Tc.

3. Procédé selon l'une quelconque des revendications précédentes dans lequel la température est dans une plage entre 5°C en dessous de Tc et 5°C au dessus de Tc.

4. Procédé selon l'une quelconque des revendications précédentes dans lequel la durée de traitement est comprise entre 5 et 100 heures.

5. Procédé selon l'une quelconque des revendications précédentes dans lequel le polyamide est choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12.

6. Procédé selon l'une quelconque des revendications précédentes dans lequel le polyamide est sous forme de granulés ou de poudre.

7. Procédé de fabrication d'objets en polyamide par agglomération de poudres de polyamide par fusion utilisant un rayonnement, les poudres ayant été traitées selon le procédé de la revendication 6 ou résultant d'un broyage de granulés traités selon le procédé de la revendication 6.

8. Procédé selon la revendication 7 dans lequel le rayonnement provient d'un faisceau laser.

**Patentansprüche**

1. Verfahren zur Erhöhung mindestens eines der beiden folgenden Parameter eines Polyamids: (i) Schmelzpunkt und (ii) Schmelzenthalpie △Hf, bei dem man:

   • dieses Polyamid im festen Zustand bei einer Temperatur in der Nähe seiner Kristallisationstemperatur Tc über einen zur Bewirkung dieser Erhöhung ausreichenden Zeitraum mit Wasser oder Wasserdampf in Berührung bringt,
   • und dann das Wasser (bzw. den wasserdampf) von dem Polyamid abtrennt und das Polyamid trocknet.

2. Verfahren nach Anspruch 1, bei dem die Temperatur in einem Bereich zwischen 10°C unter Tc und 10°C über Tc liegt.

3. Verfahren nach einem der vorhergehenden Ansprüche, bei dem die Temperatur in einem Bereich zwischen 5°C unter Tc und 5°C über Tc liegt.

4. Verfahren nach einem der vorhergehenden Ansprüche, bei dem die Dauer der Behandlung zwischen 5 und 100 Stunden liegt.

5. Verfahren nach einem der vorhergehenden Ansprüche, bei dem man das Polyamid unter PA 11, PA 12, aliphatischen Polyamiden, die sich aus der Kondensation eines aliphatischen Diamins mit 6 bis 12 Kohlenstoffatomen und einer aliphatischen Disäure mit 9 bis 12 Kohlenstoffatomen ergeben, und Copolyamiden 11/12 mit entweder mehr als 90% 11-Einheiten oder mehr als 90% 12-Einheiten auswählt.

6. Verfahren nach einem der vorhergehenden Ansprüche, bei dem das Polyamid in Granulat- oder Pulverform vorliegt.

7. Verfahren zur Herstellung von Polyamidgegenständen durch Sintern, wobei die Pulver nach dem Verfahren gemäß Anspruch 6 behandelt worden sind oder sich aus dem Zerkleinern von nach dem Verfahren gemäß Anspruch 6 behandelten Granulaten ergeben.

8. Verfahren nach Anspruch 7, bei dem die Strahlung von einem Laserstrahl stammt.

**Claims**

1. Method for increasing at least one of the following two parameters of a polyamide: (i) its melting point and (ii) its enthalpy of melting $\Delta H_m$, in which:

   • this polyamide is brought into contact in the solid state with water or with steam at a temperature close to its crystallization temperature $T_c$ for a time long enough to effect this increase;
   • then, the water (or steam) is separated from the polyamide and the polyamide is dried.

2. Method according to Claim 1, in which the temperature lies within a range between 10°C below $T_c$ and 10°C above $T_c$.

3. Method according to either of the preceding claims, in which the temperature lies within a range of between 5°C below $T_c$ and 5°C above $T_c$.

4. Method according to any one of the preceding claims, in which the duration of treatment is between 5 and 100 hours.

5. Method according to any one of the preceding claims, in which the polyamide is chosen from PA-11, PA-12, aliphatic polyamides resulting from the condensation of an aliphatic diamine having from 6 to 12 carbon atoms and an aliphatic diacid having from 9 to 12 carbon atoms, and 11/12 copolyamides having either more than 90% of nylon-11 units or more than 90% of nylon-12 units.

6. Method according to any one of the preceding claims, in which the polyamide is in the form of granules or powder.

7. Process for manufacturing polyamide objects by the sintering of polyamide powders by melting them using radiation, the powders having been treated according to the method of Claim 6 or resulting from the grinding of granules treated according to the method of Claim 6.

8. Process according to Claim 7, in which the radiation comes from a laser beam.